# EUROPEAN PATENT APPLICATION

(11) **EP 1 259 075 A2**
(43) Date of publication of application: **20.11.2002**
(21) Application number: 02396066.9
(22) Date of filing: 10.05.2002
(51) Int. Cl.: H04N 7/173

(54) **Method for broadcasting applications in a DVB network**

(30) Priority: 15.05.2001 FI 20011016
(71) Applicant: Digita OY, 00520 Helsinki (FI)
(72) Inventor: Heikkil-, Pauli, 02720 Espoo (FI)
(74) Representative: Savela, Antti-Jussi

(57) **Abstract**

The invention concerns a new kind of browser intended for exploring digital broadcasts. This browser is termed a divided browser because it consists of two kinds of parts: a heavy part in the transmission end and several light parts in the reception ends. The light parts need less memory and processor capacity than the prior art browsers. The light part is specially purposed for mobile terminal equipment, such as a personal digital assistant (PDA) or a mobile phone, but it can be also used in the set-top boxes of digital TV-receivers. The divided browser consisting of a heavy part and several light parts operates as follows: the heavy part transforms ML into JAVA objects, the JAVA objects are transmitted over the DVB network to the terminal equipment in which the light parts are installed, and finally the light parts execute the JAVA objects through an application programming interface. The invention also concerns transmitting JAVA classes and serialized data in the DVB network.

## Description

### Field of the invention

The present invention generally relates to delivering digital video/audio broadcasts to terminal equipment, such as a digital TV-receiver.

### Background of the invention

Digital broadcasting is a way of storing and broadcasting video and audio signals as a series of 1 and 0 bits, rather than as a continuously varying wave, which is the way that analogue television signals are broadcast. Compared to an analogue signal, a digital signal increases the quality of the broadcast signal. A digital signal also decreases usage of the broadcasting spectrum, i.e. the frequency band allocated for the usage of a certain broadcast company. Therefore the digital signal increases the number of channels and programmes that can be broadcast.

Digital broadcasting involves radio, television, text, multimedia programmes, the Internet, and data. A digital television set may be able to receive all of these types of services. Digital Audio Broadcasting (DAB) and Digital Video Broadcasting (DVB) are terms generally used in association with digital broadcasting.

When watching digital TV-programmes the viewers can make two kinds of choices. As usual, they can choose TV-channels and select some information interesting to them. They also can send information to the broadcaster. This enables, for example, making orders, answering in quizes, taking part in polls and charity campaigns.

An interactive TV or a two-way TV is a term which is usually used when the viewers can communicate with the interactive services shown on TV. A return channel or a back channel is a term meaning the channel which is intended for transmitting viewer data, such as the viewer's identity and choices or other types of viewer's actions, to the interactive services.

In the present application a channel termed here the "bi-directional channel" operates as a return channel. In addition, the bi-directional channel can be used for transmitting data to viewers. The bi-directional channel may be, for example, a channel of a fixed network or a channel of a wireless network, such as a mobile network. The usage of the bi-directional channel usually causes costs for the viewer.

Digital broadcasts can be received via satellite, a terrestrial network, a telephone line, or via a cable network. These ways differ from each other, for example, in regard to the number of channels, the size of the geographical reception area, and the costs of the infrastructure needed.

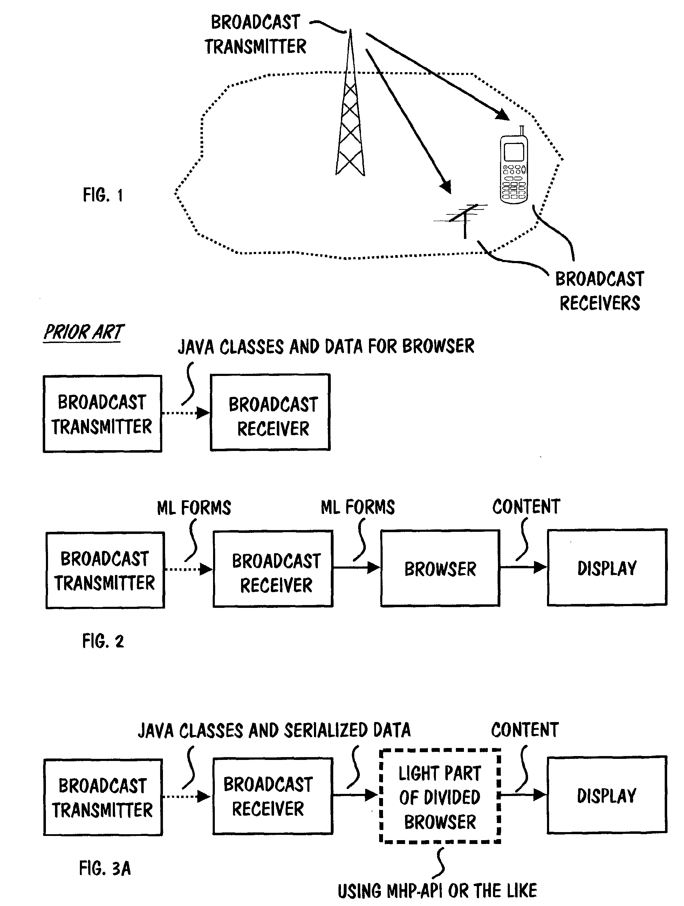

FIG. 1 shows a broadcast transmitter and broadcast receivers used in a terrestrial DVB network. The broadcast receivers can be mobile, such as mobile phones. Or, the broadcast receivers can be stationary, such as homes with digital TVs and fixed antennas.

The world wide web (WWW or web) is a widely known hypermedia information system based on the Internet. In the web hypermedia information is traditionally represented using hypertext markup language (HTML). HTML and extensible markup language (XML) are intended for forming structured documents to be interchanged in the web. Those structured documents are searched and read through software which is termed a browser.

Wireless markup language (WML) is a language that allows the text portions of said structured documents to be presented via a wireless network, for example, on a mobile phone. WML is part of the wireless application protocol (WAP), and a WAP phone is a mobile phone able to communicate according to this protocol.

Web sites include information which is stored in HTML forms. HTML forms can be transmitted over the DVB network. Also other types of ML forms (markup language forms) can be transmitted over the DVB network. The ML forms are read and handled by a browser. The browser shows the ML forms on a display for an end-user. The browser may be located in a set-top box, and the display may actually be a digital TV-receiver. It is also possible to locate the browser and the display in the same equipment, for example, in a personal digital assistant (PDA).

Web sites may include not only text and pictures (or images), but also animations. Usually an animation consists of 15-30 pictures a second. When a display consists of 640x480 pixels and one byte is usable per pixel, 15-30 pictures a second require 4,5 - 9 MB/s transfer capacity. Typically, modems intended for viewers have less transfer capacity and thus another technique is needed for transmitting animations in the Internet. One such technique is to make a program for displaying animations.

JAVA is an object-oriented programming language developed by Sun. The JAVA source code is termed either JAVA application or JAVA applet. A JAVA application is an independent program just like, for example, a C++ program. A JAVA applet, i.e. the source code written by a programmer, is at first compiled by a JAVA compiler. The compiling results in a JAVA bytecode which is also termed "virtual machine language".

For example, Sun's JAVA compiler reads the source code and writes classes in at least one file having a file extension ".class".

The JAVA bytecode consists of this kind of classes, therefore "JAVA bytecode" and "JAVA classes" are more or less synonyms.

The JAVA bytecode is delivered one way or another to terminal equipment where a browser, such as the Microsoft Internet Explorer, reads the JAVA bytecode and interprets it. Said interpretation results in "JAVA objects" which are instantiated JAVA classes. The JAVA objects create a certain content to be shown or played for a user of the browser.

FIG. 2 shows an example of a digital broadcast in the prior art. The broadcast includes ML forms and a browser for browsing the ML forms. The browser consists of JAVA classes and data relating to the JAVA classes. First the browser, i.e. the JAVA classes and data are transmitted over the DVB network to the terminal equipment. Then ML forms are transmitted over the DVB network and the browser interprets the ML forms. The interpreting results in the content to be shown on the display of the terminal equipment.

There are certain drawbacks relating to the digital broadcasting methods known in the prior art.

First, the prior art browsers being intended for browsing ML forms require a relatively high memory and processor capacity. Small-sized mobile terminal equipment cannot have much memory, i.e. they require another kind of technique than normal set-top boxes.

Secondly, the prior art browsers are large, therefore it takes time to read or receive the bits, which compose the browser, and load the browser in the terminal equipment. The loading phase of the browser causes pauses in the digital broadcasts, which disturbs the viewer.

Thirdly, in most cases the bi-directional channel has to be open all the time when an interactive service is used. The usage of bi-directional channels is usually chargeable, therefore the usage of interactive services may cause relatively high costs for a viewer.

### Summary of the invention

The first objective of the invention is to define a new kind of browser for exploring digital broadcasts. This browser is termed a divided browser because it consists of two kinds of parts: a heavy part in the transmission end and several light parts in the reception ends. Those light parts need less memory and processor capacity than the prior art browsers. The light part is specially purposed for mobile terminal equipments, such as a personal digital assistant (PDA) or a mobile phone, but it can be also used in the set-top boxes of digital TV-receivers.

Thus, the divided browser consists of a heavy part and several light parts. It operates as follows: the heavy part transforms ML into JAVA classes and serialized data; both are transmitted over the DVB network to the terminal equipment in which the light parts are installed; then the light parts instantiate the JAVA classes with the serialized data resulting in the JAVA objects which uses an application programming interface.

The light part can be installed in the memory of terminal equipment but it can also be received as a digital broadcast. The light part can be either static or dynamic. The static light part consists of certain JAVA classes. Conversely, the dynamic light part consists of a different set of JAVA classes in different moments.

The second objective of the invention is to eliminate the pauses in digital broadcasts. It is important to make the light part of the divided browser as small as possible. A small-sized static light part can be stored in the random access memory (RAM) of the terminal equipment, thus avoiding the loading phase of the browser. Alternatively, the JAVA classes relating to the dynamic light part can be transmitted, instantiated, and executed one by one. The dynamic light part itself can be an application showing some content.

The third objective of the invention is to keep the bi-directional channel open only when necessary, which reduces the usage costs of interactive services. When using an interactive service, the light part collects information, such as the user's choices. The light part opens the bi-directional channel, sends the information to the heavy part, and after that, it may close the bi-directional channel. Then the heavy part communicates with the interactive service, transforms the ML forms relating to the interactive service to the JAVA classes and serialized data, and transmits them to the light part either on the transmission channel or on the bi-directional channel.

### Brief description of the drawings

The invention is described more closely with reference to the accompanying drawings, in which
- Figure 1: shows a broadcast transmitter and broadcast receivers used in a terrestrial DVB network.
- Figure 2: shows a digital broadcasting in the prior art.
- Figure 3A: depicts a digital broadcasting and a light part.
- Figure 3B: depicts a heavy part.
- Figure 4: shows a divided browser.
- Figure 5A: shows the first embodiment of the invention.
- Figure 5B: shows the second embodiment of the invention.
- Figure 5C: shows the options related to the embodiments.

### Detailed description of the invention

An application programming interface (API) is a known interface enabling the efficient execution of application programs. These application programs are termed API applications. During execution, an API application uses dynamically linked libraries. The dynamically linked libraries are loaded into a memory only once, because all API applications can use the same libraries. The dynamically linked libraries support a type of parallel processing termed multithreading. Multithreading means that each thread, i.e. "process", is related to the instance of some application.

Each instance of an API application has its own data area in the memory, but all the instances of the same API application have the same executable code. Thus, API reduces memory consumption and processor capacity requirements.

Multimedia Home Platform API (MHP-API) is a special Application Programming Interface for multimedia applications.

In the present application an API application consists of the JAVA classes and serialized data being transmitted over the DVB network. The JAVA classes are instantiated with the serialized data to the JAVA objects. The JAVA objects use API when composing the content to be displayed for a viewer. The JAVA objects preferably use MHP-API but they may use some other API. In addition to API, the terminal equipment has to include a JAVA virtual machine to be able to utilize the present invention.

FIG. 3A depicts the inventive digital broadcasting during which the JAVA classes and the serialized data are transmitted over the DVB network. A broadcast transmitter transmits the JAVA classes and the serialized data to a broadcast receiver, through which a light part receives them. It is important to note, that the light part may or may not be static, i.e. consisting of certain JAVA classes. The static light part may or may not be stored in the memory of the terminal equipment. Alternatively, the static light part can be received as a digital broadcast. In any case, the static light part can instantiate the JAVA classes and execute the JAVA classes. If the light part is dynamic, the JAVA classes are, one by one, instantiated to JAVA objects and executed and possibly removed from the memory. Thus, the dynamic light part consists of a different set of JAVA classes in different moments.

It is important to notice that the serialized data differs from the data shown in figure 2. Each class transmitted in figure 3A has a certain piece of the serialized data. Therefore the serialized data transmitted in figure 3A consists of said class-specific pieces.

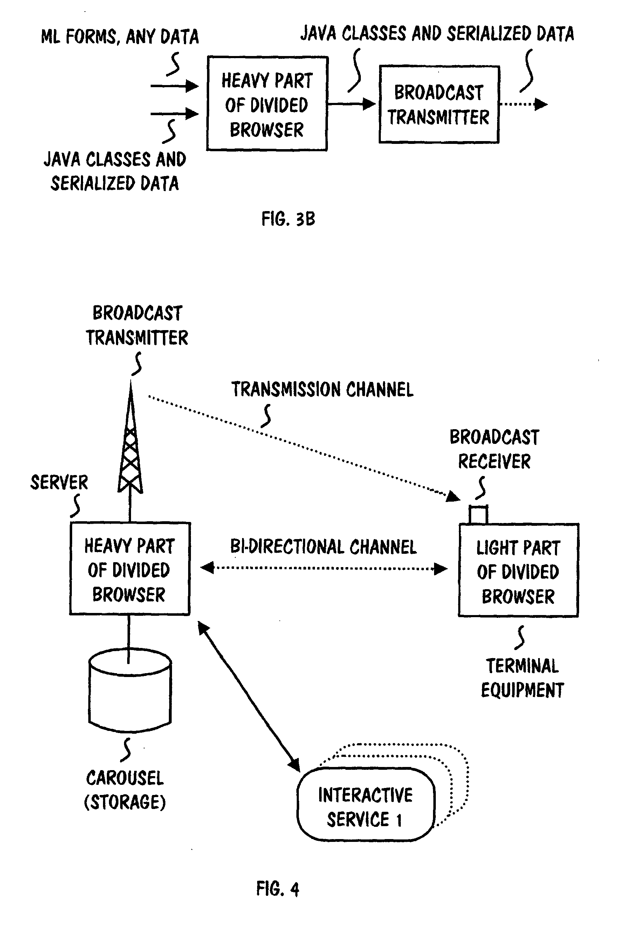

FIG. 3B depicts the heavy part transmitting through the broadcast transmitter shown in figure 3A. The heavy part may receive the JAVA classes and the serialized data from certain storage and then no transformation is needed. In another case, the heavy part transforms ML forms or any data into the JAVA classes and serialized data. Those JAVA classes include methods which call MHP-API services. The transforming is executed by software being termed the heavy part of the divided browser. The heavy part is installed in a server which is located in the site of the broadcast transmitter or in some other site. The transforming is executed so that the JAVA classes include the methods using API; and the said API is the same as is installed in the terminal equipment which receives the JAVA classes.

The digital broadcast shown in figures 3A and 3B differ from the prior art digital broadcast shown in figure 2. First, the broadcast in figure 2 is two-phased, the JAVA classes are transmitted in phase 1 and the ML forms in phase 2. Secondly, all the JAVA classes relates to the browser. Thirdly, the browser browses ML forms.

Conversely, in figures 3A and 3B the broadcast can be one-phased so that a viewer obtains at once some content on the display. This is possible when using the dynamic light part, or the static light part stored in the memory of the terminal equipment.

As can be noticed in figures 3A and 3B, no ML form is transmitted. In addition, the JAVA classes transmitted may relate to the content to be displayed, i.e. to something else than the browser. Lastly, the browser browses the JAVA classes and serialized data, or some other data than ML forms, for example, video or audio stream.

The JAVA classes are instantiated in the terminal equipment to JAVA objects so that the JAVA objects include methods which call MHP-API services. The MHP-API services are located in the terminal equipment so that the JAVA objects can use them.

Viewers may have different terminal equipment types and models. It is possible that the heavy part of the divided browser creates JAVA classes for each terminal equipment type and model, and said JAVA classes are transmitted in the DVB network. Of course, this kind of solution wastes the transmission capacity.

A better solution is that the heavy part creates only one kind of JAVA classes and each terminal equipment type and model has its own version of the MHP-API services. For example, if a JAVA object is intended for drawing a circle by calling an MHP-API service, the MHP-API service should draw the circle which is adequate for the display of the terminal equipment.

FIG 4 shows a divided browser and a set of interactive services which consist of ML forms. Said interactive services are located outside of the server in which the heavy part is installed, for example, in the Internet. The heavy part has a connection to a broadcast transmitter and a carousel. The carousel is used as storage for the JAVA classes and serialized data which are transmitted in the DVB network. It can also be the storage of content data, such as video or audio. The carousel may include, for example, the thousand most favourite Internet pages. When a viewer wants a certain page of an interactive service, the heavy part fetches the page from the site of the interactive service. Then the heavy part transforms the page to the JAVA classes and serialized data and transmits them to the light part.

If some page is statistically very popular, the heavy part may store the JAVA classes and serialized data related to that page in the carousel.

Some interactive services or non-interactive services may be composed of the JAVA classes and serialized data which programmers have stored in the carousel.

Some details related to the objectives of invention will now be examined in more detail.

The first objective is to define a divided browser of which the light part uses less memory and processor capacity than the prior art browsers. The said objective is achieved by exploiting MHP-API or some other API through which the light part obtains API services.

When considering mobile phones, PDAs, or some other small size mobile terminal equipment, it is probable that the broadcast receiver and the light part of the divided browser are plugged in the same terminal equipment. When considering digital TV-receivers, in most cases a fixed antenna is used as the broadcast receiver being connected to a set-top box which is connected to a digital TV-receiver. Generally speaking, the light part somehow receives the JAVA classes transmitted. The broadcast receiver and the light part may, or may not, be in the same terminal equipment.

The second objective is to eliminate the disturbing pauses in the digital broadcasts. The said objective is achieved by making the light part of the divided browser as small as possible. A small-sized static light part can be stored in the random access memory (RAM) of the terminal equipment, thus totally avoiding the loading phase of the browser. Alternatively, the JAVA classes relating to the dynamic light part can be transmitted, instantiated, and executed in small sets. If the dynamic light part is an application which shows content, its JAVA objects can be executed one by one, thus eliminating the disturbing pauses.

The third objective is to keep the bi-directional channel open only when necessary. The said objective is achieved be the light part not communicating directly with the interactive service, but via the heavy part of the divided browser. This makes it possible to keep the bi-directional channel open only when the viewer data, including the viewer's choices etc, are sent to the heavy part. This can be done, for example, by using short messages. Then the content which interests the viewer, can be sent on the transmission channel, which is "free of charge". Alternatively, the heavy part can open the bi-directional channel and send the content via it.

The objectives of the invention are achieved with the independent patent claims. The invention comprises two different embodiments being included in the patent claims. Both the embodiments of the invention are based on the divided browser.

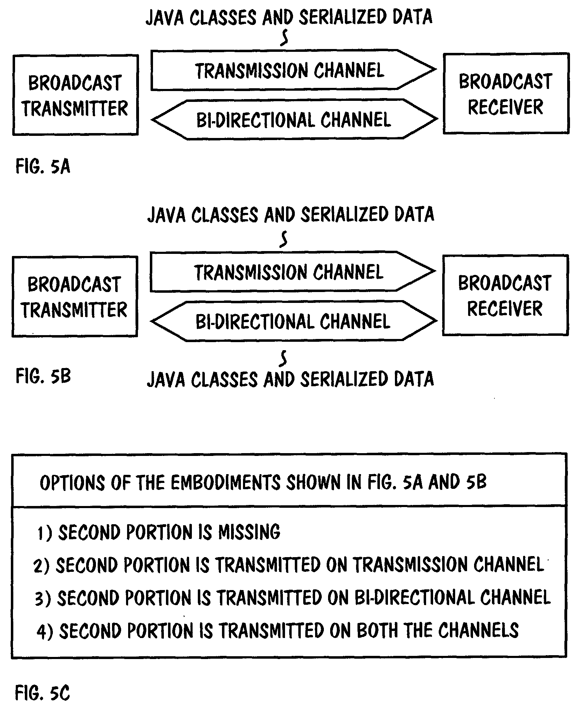

FIG 5A shows the first embodiment of the invention wherein the JAVA classes and serialized data are transmitted on a transmission channel. In the first embodiment it is possible to omit a bi-directional channel. Then the costs related to the bi-directional channel are omitted but, of course, the viewer data cannot be transmitted either.

FIG 5B shows the second embodiment of the invention, wherein some JAVA classes and serialized data are transmitted on the transmission channel and some on the bi-directional channel. When compared to the first embodiment, the second embodiment saves the capacity of the transmission channel.

FIG 5C shows the options which can be related to the first and second embodiments. As mentioned above, a digital video or audio broadcast consists of bits. The first portion of the bits is transformed to JAVA classes and serialized data. The second portion includes the bits not transformed to the JAVA classes and serialized data.

A digital video or audio broadcast consists of bits. Sometimes it is preferable to transform all the bits of a digital broadcast to JAVA classes. Some other time, it is preferable to transform only the first portion of said bits to JAVA classes and transmit a second portion of said bits as such, i.e. as video or audio stream. However, there are no literal rules which portion of the bits should be transformed to JAVA classes and which not.

The first option is that the second portion is missing, i.e. all the bits are transformed to the JAVA classes and serialized data. In the other options the second portion exists. The second option is that the second portion is transmitted on the transmission channel only. The third option is that the second portion is transmitted on the bi-directional channel only. The fourth option is that the second portion is transmitted partly on the transmission channel and partly on the bi-directional channel.

The JAVA virtual machine provides a run-time environment in which the JAVA classes are instantiated to the JAVA objects, and each JAVA object operates as an independent program, i.e. an executable code. For example, in C++ certain linking and binding phases are needed for resulting in an adequate executable code. Typically, said code must be composed of several classes. However, it is possible that in the future some programming language will provide the same kind of run-time environment as JAVA. Therefore "JAVA" is omitted from the independent claims.

## Claims

1. A method for digital broadcasts in a digital broadcast network consisting of a server with a broadcast transmitter and at least one terminal equipment with a broadcast receiver, a digital broadcast including classes and serialized data,
**characterized by** the steps of:
transmitting the classes and the serialized data on a transmission channel though the broadcast receiver,
receiving the classes and the serialized data through the broadcast receiver, and
instantiating the classes and the serialized data into objects in the terminal equipment.

2. A method for digital broadcasts in a digital broadcast network consisting of a server with a broadcast transmitter and at least one terminal equipment with a broadcast receiver, the server and the terminal equipment having a bi-directional channel for communication, a digital broadcast consisting of bits belonging to either a first portion or a second portion,
**characterized by** the steps of:
transforming the first portion into classes in the server and
serializing data which is related to the classes,
transmitting the classes and the serialized data on a transmission channel though the broadcast receiver,
receiving the classes and the serialized data through the broadcast receiver, and
instantiating the classes and the serialized data into objects in the terminal equipment.

3. The method as defined in claim 1 or 2, **characterized by** the further steps of:
executing the objects in the terminal equipment through an application programming interface.

4. The method as defined in claim 1 or 2, **characterized in that** the second portion includes no bits.

5. The method as defined in claim 1 or 2, **characterized by** the further steps of:
transmitting the second portion on the transmission channel.

6. The method as defined in claim 1 or 2, **characterized by** the further steps of:
transmitting the second portion on the bi-directional channel.

7. The method as defined in claim 1 or 2, **characterized by** the further steps of:
transmitting a first quota of the second portion on the transmission channel and
transmitting a second quota of the second portion on the bi-directional channel.

8. A method for using a bi-directional channel during digital broadcasts, said broadcasts transmitted in a digital broadcast network consisting of a server with a broadcast transmitter and at least one terminal equipment with a broadcast receiver, the bi-directional channel used for communication between the terminal equipment and an interactive service, the interactive service consisting of mark-up language forms,
**characterized by** the steps of:
in the server,
transforming at least one mark-up language form of the interactive service into classes,
storing the classes in a storage,
transmitting the classes on a transmission channel,
receiving via the bi-directional channel a request for a mark-up language form of the interactive service, the request being related to the classes transmitted,
obtaining the mark-up language form requested from a site of the interactive service, and
transforming the mark-up language form requested into at least one class.

9. The method as defined in claim 8, **characterized by** the further steps of:
transmitting the class on the bi-directional channel, the class being transformed from the mark-up language form requested.

10. The method as defined in claim 9, **characterized by** the further steps of:
transmitting the class on the transmission channel, the class being transformed from the mark-up language form requested.

11. The method as defined in claim 1, 2 or 8, **characterized in that** the classes are JAVA classes.

12. A divided browser for digital broadcasts in a digital broadcast network consisting of a server with a broadcast transmitter and at least one terminal equipment with a broadcast receiver, a digital broadcast including classes and serialized data, the divided browser including a heavy part installed in the server and a light part installed in the terminal equipment,
**characterized in that** the divided browser comprises:
in the heavy part,
means for transmitting the classes and the serialized data on a transmission channel through the broadcast receiver;
in the light part,
means for receiving the classes and the serialized data through the broadcast receiver, and
means for instantiating the classes and the serialized data into objects.

13. A divided browser for digital broadcasts in a digital broadcast network consisting of a server with a broadcast transmitter and at least one terminal equipment with a broadcast receiver, the server and the terminal equipment having a bi-directional channel for communication, a digital broadcast consisting of bits, the divided browser including a heavy part installed in the server and a light part installed in the terminal equipment,
**characterized in that** the divided browser comprises:
in the heavy part,
means for transforming a portion of said bits into classes,
means for serializing data which is related to the classes,
means for transmitting the classes and the serialized data on a transmission channel through the broadcast receiver;
in the light part,
means for receiving the classes and the serialized data through the broadcast receiver, and
means for instantiating the classes and the serialized data into objects.

14. The divided browser as defined in claim 12 or 13,
**characterized in that** the divided browser further comprises:
in the light part,
means for executing the objects through an application programming interface.

15. The divided browser as defined in claim 12 or 13,
**characterized in that** the divided browser further comprises:
in the heavy part,
means for transforming at least one mark-up language form of an interactive service into classes,
means for storing the classes in a storage,
means for receiving via the bi-directional channel a request for a mark-up language form of the interactive service, the request being related to the class transmitted, and
means for obtaining the mark-up language form requested from a site of the interactive service.

16. The divided browser as defined in claim 15,
**characterized in that** the divided browser further comprises:
in the heavy part,
means for transmitting a class on the bi-directional channel, the class being transformed from the mark-up language form requested.

17. The divided browser as defined in claim 15,
**characterized in that** the divided browser further comprises:
in the heavy part,
means for transmitting a class on the transmission channel, the class being transformed from the mark-up language form requested.

18. The divided browser as defined in claim 12 or 13,
**characterized in that** the classes are JAVA classes.
